**Europäisches Patentamt**

**European Patent Office**

**Office européen des brevets**

(19)

(11) Veröffentlichungsnummer: **0 151 958 B1**

# EUROPÄISCHE PATENTSCHRIFT

(45) Veröffentlichungstag der Patentschrift: **10.04.91**

(51) Int. Cl.5: **G01P 15/08**

(21) Anmeldenummer: **85100500.9**

(22) Anmeldetag: **18.01.85**

(54) **Faseroptischer Geber zum Messen dynamischer Beschleunigungen.**

(30) Priorität: **25.01.84 SE 8400366**

(43) Veröffentlichungstag der Anmeldung:
**21.08.85 Patentblatt 85/34**

(45) Bekanntmachung des Hinweises auf die
Patenterteilung:
**10.04.91 Patentblatt 91/15**

(84) Benannte Vertragsstaaten:
**DE FR GB**

(56) Entgegenhaltungen:
**EP-A- 0 096 262**
**DE-A- 2 624 884**
**US-A- 4 215 275**

(73) Patentinhaber: **Takaoka Electric Co., Ltd.**

**Tokio(JP)**

(72) Erfinder: **Hök, Bertil**
**Sportfiskargatan 53**
**S-723 48 Västeras(SE)**
Erfinder: **Jonsson, Lars, Dipl.-Ing.**
**Malmabergsgatan 79 F**
**S-723 35 Västeras(SE)**

(74) Vertreter: **Boecker, Joachim, Dr.-Ing.**
**Rathenauplatz 2-8**
**W-6000 Frankfurt a.M. 1(DE)**

EP 0 151 958 B1

## Beschreibung

Die vorliegende Erfindung betrifft einen faseroptischen Geber zum Messen dynamischer Beschleunigungen gemäß dem Oberbegriff des Anspruches 1. Ein solcher Geber ist bekannt aus der Figur 2 der EP-A-0 096 262. Er kann beispielsweise in der in der EP-A-0 096 262 beschriebenen faseroptischen Meßanordnung verwendet werden.

Bei dem bekannten Geber ist vor der Endfläche dar im Geber endenden optischen Faser ein schwingungsfähig eingespannter plattenförmiger Körper in fester Verbindung mit der Faser angeordnet, welcher das aus der Faser austretende Licht in diese zurückreflektiert. Unter der Wirkung einer Beschleunigung biegt sich der einseitig eingespannte Körper durch, wobei sich der Winkel zwischen der reflektierenden Fläche und der Endfläche der Faser verändert. Um diese Winkeländerung in eine Veränderung des zur Meßauswertungsseite der Faser zurückgeleiteten Lichtes umzusetzen, bildet die Endfläche der Faser und die reflektierende Fläche des schwingungsfähigen Körpers mit der Normalen zur Faserachse einen nicht unbeachtlich großen spitzen Winkel. Hierdurch wird erreicht, daß ein Teil der unter verschiedenen Winkeln von dem reflektierenden Körper in die Faser zurückreflektierten Strahlen über die zylindrische Wand der Faser diese verläßt, wobei dieser Anteil von der Durchbiegung der reflektierenden Platte unter der Wirkung der Beschleunigung abhängt.

Aus der US-A-4 215 275 ist eine Temperaturmeßanordnung bekannt, bei welcher der Geber aus vor dem Faserende ange brachtem Phosphormaterial besteht, welches von dem über die Faser herangeführten Anregungslicht beaufschlagt wird. Dabei erzeugt das Phosphormaterial im wesentlichen zwei Lichtkomponenten mit unterschiedlicher Wellenlänge, deren Intensitätsverhältnis stark von der Temperatur abhängig ist. Auf der Meßauswertungsseite wird das aus der Faser austretende Licht über normale Linsen auf Strahlungsaufteilerglieder geleitet, die die beiden Lichtkomponenten mit unterschiedlichen Frequenzen von einander trennen.

Der Erfindung liegt die Aufgabe zugrunde, einen Geber der eingangs genannten Art zu entwickeln, der ein höheres Signal/Störpegelverhältnis hat und somit eine bessere Auflösung des Meßsignals ermöglicht.

Zur Lösung dieser Aufgabe wird ein Geber gemäß dem Oberbegriff des Anspruches 1 vorgeschlagen, welcher erfindungsgemäß die im kennzeichnenden Teil des Anspruches 1 genannten Merkmale hat.

Vorteilhafte Ausgestaltungen der Erfindung sind in den weiteren Ansprüchen genannt.

Der Geber nach der Erfindung stellt eine Verbesserung des in der oben genannten Druckschrift EP-A-0 096 262 beschriebenen Gebers zur Beschleunigungsmessung dar.

Durch Ausnutzung des von dem beweglich eingespannten Körper reflektierten Signals in Kombination mit einem Regelkreis, der von einen Fotolumineszenzsignal gesteuert wird, welches von einem im Geber eingebauten fotolumineszierenden Material erzeugt wird, erhält man ein höheres Signalniveau. Gleichzeitig ist das System gegenüber Verlusten und Reflexionen in den Faserverbindungen und Verzweigungen unempfindlich.

Anhand der in den Figuren gezeigten Ausführungsbeispiele soll die Erfindung näher erläutert werden. Es zeigen

Figur 1     den prinzipiellen Aufbau eines Gebers nach der Erfindung in einem Schnitt parallel zur optischen Achse,

Figur 2     ein Detail des Gebers gemäß Figur 1 in Blickrichtung der optischen Achse zur Erläuterung des Funktionsprinzips des Gebers,

Figur 3     ein zweites Ausführungsbeispiel der Erfindung

Figur 4     ein drittes Ausführungsbeispiel der Erfindung.

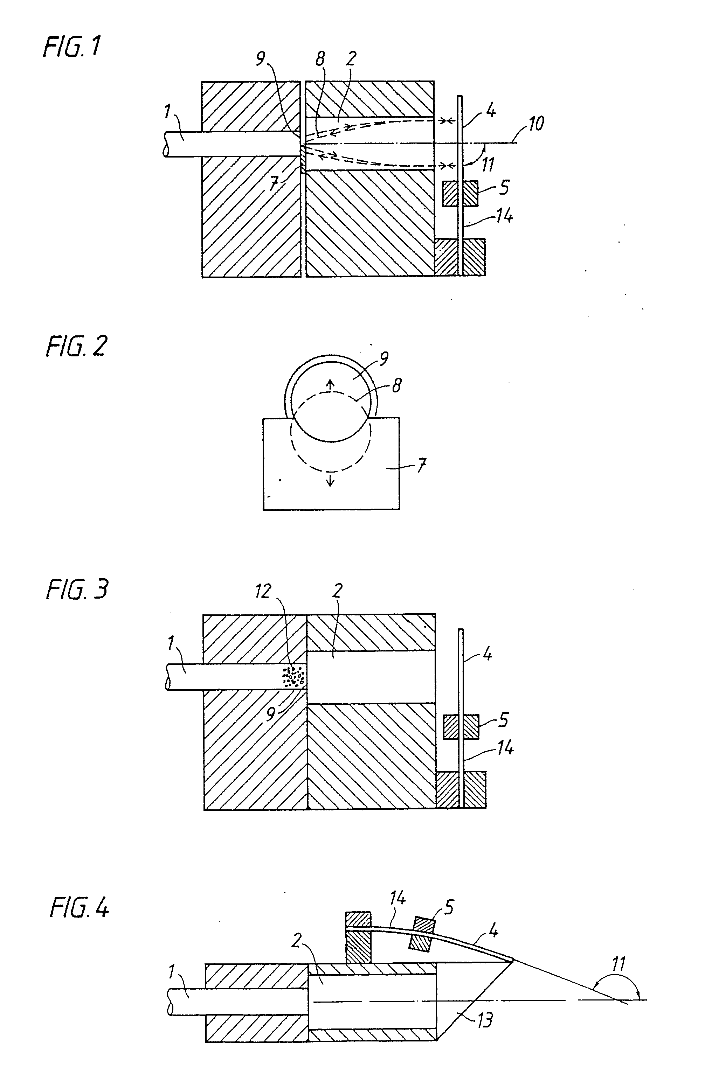

Die Figuren 1 und 2 zeigen, wie die von einer Leuchtdiode ausgestrahlte optische Energie (z.B. Licht) durch eine optische Faser 1 einem Geber zugeführt wird. Das Strahlenbündel wird in einer Linse 2 des graded-index-Typs (GRIN-Linse) parallelisiert (kollimiert). Das Strahlenbündel trifft dann auf eine einseitig eingespannte Zunge 4 oder einen anders geformten Körper aus elastisch verformbarem Material, von der/dem das Licht reflektiert wird und durch die Linse 2 auf die Faserendfläche 9 zurückfokusiert wird. Der Geber ist dabei jedoch so eingestellt, daß das von dem Strahlenbündel abgebildete Bild 8 die Faserendfläche 9 nur etwa zur Hälfte überdeckt (siehe Figur 2). Der nicht auf die Faserendfläche fallende Teil des reflektierten Lichtes trifft auf ein fotolumineszierendes Material 7 und verursacht dort Fotolumineszenz. Wenn der Geber in axialer Richtung beschleunigt wird, biegt sich das freie Ende der Zunge 4, und der Winkel 11 zwischen dem freien Ende der Zunge 4 und der Achse 10 der Linse verändert sich. Dadurch wird das Bild 8 verschoben, so daß die über die Faser 1 zurückgeleitete reflektierte Licht menge sich verändert. Das entstehende Fotolumineszenzlicht wird ebenfalls von der Zunge 4 reflektiert und durch die Faser 1 zurückgeleitet.

Das Reflexionssignal und das Fotolumineszenzsignal werden dann in einer Anordnung verarbeitet, wie sie beispielsweise in der oben genannten EP-A-0 096 262 beschrieben wird. Ein Körper 5 dient dazu, durch seine Masse eine mechanische Signalverstärkung zu bewirken. Diese Masse muß symmetrisch zur Zunge 4 angebracht werden, damit der Sensor nicht auf Beschleunigungen in Längsrichtung der Zunge anspricht.

Das fotolumineszierende Material 7 kann aus Epitaxialschichten in Halbleitern, zum Beispiel $Al_xGa_{1-x}As$, bestehen. Auch die Zunge 4 kann aus fotolumineszierendem Material, zum Beispiel $Al_xGa_{1-x}As$, bestehen, beziehungsweise mit diesem belegt sein. In diesem Falle kann auf das Material 7 eventuell verzichtet werden.

Figur 3 zeigt ein anderes Ausführungsbeispiel zur Erzeugung eines Fotolumineszenzsignals. Hier erhält man die Fotolumineszenz durch Ionen 12 aus Metallen der seltenen Erden, wie zum Beispiel Neodym. Diese Ionen sind in einem Glasmaterial, zum Beispiel in dem in Figur 3 gezeigten Faserende, eingelagert.

Figur 4 zeigt ein weiteres Ausführungsbeispiel der Erfindung. Diese Ausführungsform dient zum Messen einer Beschleunigung senkrecht zur optischen Achse 10 der Linse 2 (siehe auch Figur 1). Der Strahlengang wird hier durch ein Prisma 13 oder einen Spiegel geändert. Der Winkel 11 ist rechts in der Figur 4 abgebildet. Er ist ein Maß für die Beschleunigung.

Die Zunge 4 besteht wieder aus einem elastischen Teil und der Masse eines damit verbundenen Körpers 5. Die Masse wird auch hier vorzugsweise gleichmäßig auf beide Seiten der Zunge verteilt, um den Geber unempfindlich gegen Beschleunigungen in Längsrichtung der optischen Achse 10 zu machen. Die Zunge 4 kann, wie bereits gesagt, aus einem Halbleitermaterial bestehen, und das fotolumineszierende Material 7 kann aus einem Halbleitermaterial bestehen, wie beispielsweise $Al_xGa_{1-x}As$, oder $In_xGa_{1-x}As_yP_{1-y}$.

## Ansprüche

1. Faseroptischer Geber zum Messen dynamischer Beschleunigungen,
   - bei welchem Geber eine optische Faser (1) mit einem schwingungsfähig eingespannten Körper (4) aus elastischem Material fest verbunden ist, welcher Körper so angeordnet und beschaffen ist, daß er seine Winkellage im Verhältnis zur Achse der Faser (1) unter der Wirkung einer Beschleunigung zu verändern und aus der Faser (1) kommende optische Energie in die Faser (1) zu reflektieren vermag,
   - in welchem Geber an mindestens einer Stelle fotolumineszierendes Material (7, 12) derart angeordnet ist, daß ein Teil des Ausgangssignals des Gebers durch Fotolumineszenz erzeugte optische Energie ist,
   - und in welchen Geber das fotolumineszierende Material so angeordnet ist, daß die Abhängkeit der durch Fotolumineszenz erzeugten and zurück in die Faser feleiteten optischen Energie von dem Winkel (11) wesentlich geringer ist als die der vom Körper (4) reflektierten Energie,
   **dadurch gekennzeichnet,**
   - daß mindestens eine Linse (2) des graded-index-Typs zwischen dem Ende der Faser (1) und dem Körper (4) derart angeordnet ist, daß die Strahlen der aus der Faser in die Linse geleiteten optischen Energie von der Linse parallel gerichtet werden und daß die von dem Körper (4) reflektierte optische Energie über die Linse (2) zur Faser zurückleitbar ist, wobei die Lage der von der Linse fokussierten optischen Energie in bezug auf die Faserendfläche (9) von dem Winkel (11) zwischen der reflektierenden Fläche des Körpers (4) und der gemeinsamen optischen Achse (10) der Faser und der Linse abhängig ist.

2. Faseroptischer Geber nach Anspruch 1, **dadurch gekennzeichnet,** daß der Winkel (11) die Überführung der durch Fotolumineszenz erzeugten optischen Energie zurück in die Faser (1) bestimmt.

3. Faseroptischer Geber nach einem der vorhergehenden Ansprüche, **dadurch gekennzeichnet,** daß die feste Verbindung zwischen dem Körper (4) und der Faser (1) mittelbar über den Halterahmen für Linse (2) hergestellt ist.

4. Faseroptischer Geber nach Anspruch 3, **dadurch gekennzeichnet,** daß der Körper (4) aus einem elastischen Teil (14) und einer mit diesem verbundenen Masse (5) besteht.

5. Faseroptischer Geber nach Anspruch 4, **dadurch gekennzeichnet,** daß die Masse (5) zu gleichen Teilen auf beide Seiten des elastischen Teils (14) verteilt ist.

6. Faseroptischer Geber nach Anspruch 5, **dadurch gekennzeichnet,** daßdie Verteilung der genannten Masse (5) auf beiden Seiten des elastischen Teils (14) symmetrisch zu diesem ist.

7. Faseroptischer Geber nach einem der Ansprüche 4, 5 oder 6 **dadurch gekennzeichnet,** daß der Körper (4) aus einem Halbleitermaterial besteht.

8. Faseroptischer Geber nach einem der vorhergehenden Ansprüche, **dadurch gekennzeichnet**, daß das fotolumineszierende Material (7) ein Halbleitermaterial ist, wie beispielsweise $Al_xGa_{1-x}As$ oder $In_xGa_{1-x}As_yP_{1-y}$.

9. Faseroptischer Geber nach einem der Ansprüche 7 oder 8, **dadurch gekennzeichnet**, daß das Halbleitermaterial in Form epitaxialer Schichten aufgebaut ist.

10. Faseroptischer Geber nach einem der vorhergehenden Ansprüche, **dadurch gekennzeichnet**, daß das fotolumineszierende Material (7) an der Endfläche (9) der Faser (1) angebracht ist und diese ganz oder teilweise bedeckt.

11. Faseroptischer Geber nach einem der Ansprüche 1 bis 9, **dadurch gekennzeichnet**, daß das fotolumineszierende Material (12) aus Metallionen besteht, die nahe der Endfläche (9) der Faser (1) im Material der Faser eingelagert sind.

12. Faseroptischer Geber nach einem der vorhergehenden Ansprüche, **dadurch gekennzeichnet**, daß am freien Ende der Linse (2) ein Prisma (13) angeordnet ist, welches die Strahlen um vorzugsweise 90° umzulenken vermag, und daß der Körper (4) im wesentlichen mit seiner reflektierenden Fläche parallel zu der gemeinsamen Achse der Faser und der Linse angeordnet ist und im Strahlengang des aus dem Prisma (13) austretenden Lichtes liegt.

## Claims

1. Fibre optical transducer for measuring dynamic accelerations,
   - which transducer comprises a body (4) of elastic material which is rigidly connected to an optical fibre (1) and constrained such as to be able to oscillate, said body (4) being arranged and conditioned in such a way that it can alter its angular position in relation to the axis of said fibre (1) under the effect of an acceleration and that optical energy supplied from the fibre (1) can be reflected back into the fibre (1),
   - which transducer is provided with photoluminescent material (7, 12) at at least one location in such a way that part of the output signal of the transducer consists of optical energy produced by photo-luminescence,
   - and in which transducer the photo-luminescent material is arranged such that the optical energy generated by photoluminescence and passed back into the fibre is considerably less dependent on the angle (11) than the energy reflected by the body (4),
   **characterized** in
   - that at least one lens (2) of the grade-index-type is arranged between the end of the fibre (1) and the body (4) in such a way, that the rays of the optical energy passing from the fibre into the lens are diverted into parallel rays by the lens and that the optical energy reflected from the body (4) can be led back into the fibre via the lens (2) whereby the position of the optical energy, focused by the lens, in relation to the end surface (9) of the fibre (9) depends on the angle (11) between the reflecting surface of the body (4) and the common optical axis (10) of the fibre and the lens.

2. Fibre optical transducer according to claim 1, **characterized** in that the angle (11) determines the transfer back into the fibre 1 of the optical energy generated by photo-luminescence.

3. Fibre optical transducer according to any of the preceding claims, **characterized** in that the rigid connection between the body (4) and the fibre (1) is indirectly brought about by the holding frame for the lens (2).

4. Fibre optical transducer according to claim 3, **characterized** in that the body (4) consists of an elastic part (14) and a mass (5) connected thereto.

5. Fibre optical transducer according to claim 4, **characterized** in that the mass 5 is distributed in equal portions to either side of the elastic part (14).

6. Fibre optical transducer according to claim 5, **characterized** in that the distribution of said mass (5) on either side of the elastic part (14) is symmetrically arranged with respect to said elastic part (14).

7. Fibre optical transducer according to any of claims 4, 5 or 6, **characterized** in that the body (4) consists of semi-conductor material.

8. Fibre optical transducer according to any of the preceding claims, **characterized** in that the photo-luminescent material (7) consists of a semi-conductor material, such as $Al_xGa_{1-x}As$, or $In_xGa_{1-x}As_yP_{1-y}$.

9. Fibre optical transducer according to claim 7 or 8 **characterized** in that the semi-conductor material is built up of epitaxial layers.

10. Fibre optical transducer according to any of the preceding claims, **characterized** in that, **characterized** in that the photo-luminescent material (7) is arranged at the end surface (9) of the fibre (1) covering this surface entirely or partially.

11. Fibre optical transducer according to any of claims 1 to 9, **characterized** in that the photo-luminescent material (12) consists of metal iones incorporated in the material of the fibre in the vicinity of the end surface (9) of the fibre (1).

12. Fibre optical transducer according to any of the preceding claims, **characterized** in that a prism (13) is arranged at the free end of the lens (2) capable of deflecting the rays by, preferably, 90° and that the body (4) is arranged with its reflecting surface substantially parallel to the common axis of the fibre and the lens and in the path of the light rays emerging from the prism (13).

**Revendications**

1. Transducteur ou générateur de signaux à fibre optique pour la mesure de la valeur d'accélérations dynamiques,
   - dans lequel une fibre optique (1) est reliée rigidement à un corps (4) encastré de manière à entrer en oscillations, réalisé en un matériau élastique et disposé et agencé de manière à pouvoir modifier sa position angulaire par rapport à l'axe de la fibre (1) sous l'effet d'une accélération et de pouvoir réfléchir l'énergie optique provenant de la fibre (1), pour l'introduire dans cette fibre (1), et
   - dans lequel transducteur un matériau photoluminescent (7, 12) est disposé de telle sorte en au moins un endroit qu'une partie du signal de sortie du transducteur est une énergie optique produite par photoluminescence, et
   - dans lequel transducteur le matériau photoluminescent est disposé de telle manière que la dépendance de l'énergie optique produite par photoluminescence et renvoyée dans la fibre, vis-à-vis de l'angle (11) est notablement plus faible que celle de l'énergie réfléchie par le corps (4), caractérisé par le fait
   - qu'au moins une lentille (2) du type à gradient d'indice est disposée entre l'extrémité de la fibre (1) et le corps (4) de telle sorte que les rayons de l'énergie optique provenant de la fibre et introduits dans la lentille sont redressés parallèlement entre eux par cette lentille et que l'énergie optique réfléchie par le corps (4) est susceptible d'être renvoyée par l'intermédiaire de la lentille (2) en direction de la fibre, la position de l'énergie optique focalisée par la lentille par rapport à la surface d'extrémité (9) de la fibre dépendant de l'angle (11) entre la surface réfléchissante du corps (4) et l'axe optique commun (10) de la fibre et de la lentille.

2. Transducteur à fibre optique suivant la revendication 1, caractérisé par le fait que l'angle (11) détermine le renvoi dans la fibre (1) de l'énergie optique produite par photoluminescence.

3. Transducteur à fibre optique suivant l'une des revendications précédentes, caractérisé par le fait que la liaison rigide entre le corps (4) et la fibre (1) est établie indirectement par l'intermédiaire du cadre de support de la lentille (2).

4. Transducteur à fibre optique suivant la revendication 3, caractérisé par le fait que le corps (4) est constitué par une partie élastique (14) et par une masse (5) reliée à cette partie.

5. Transducteur à fibre optique suivant la revendication 4, caractérisé par le fait que la masse (5) est répartie en parties égales des deux côtés de la partie élastique (14).

6. Transducteur à fibre optique suivant la revendication 5, caractérisé par le fait que la répartition de ladite masse (5) entre les deux côtés de la partie élastique (14) est symétrique par rapport à cette dernière.

7. Transducteur à fibre optique suivant l'une des revendications 4, 5 ou 6, caractérisé par le fait que le corps (4) est réalisé en un matériau semiconducteur.

8. Transducteur à fibre optique suivant l'une des revendications précédentes, caractérisé par le fait que le matériau photoluminescent (7) est un matériau semiconducteur comme par exemple du $Al_xGa_{1-x}As$, ou du $In_xGa_{1-x}As_yP_{1-y}$.

9. Transducteur à fibre optique suivant l'une des revendications 7 ou 8, caractérisé par le fait que le matériau semiconducteur est réalisé sous la forme de couches épitaxiales.

10. Transducteur à fibre optique suivant l'une des revendications précédentes, caractérisé par le fait que le matériau photoluminescent (7) est déposé sur la surface d'extrémité (9) de la fibre (1) et recouvre complètement ou partiellement cette dernière.

11. Transducteur à fibre optique suivant l'une des revendications I à 9, caractérisé par le fait que le matériau photoluminescent (12) est formé par des ions d'un métal, qui sont incorporés à proximité de la surface d'extrémité (9) de la fibre (1), dans le matériau de cette fibre.

12. Transducteur à fibre optique suivant l'une des revendications précédentes, caractérisé par le fait qu'à l'extrémité libre de la lentille (2) est disposé un prisme (13), qui est capable de dévier les rayons de préférence de 90° et que le corps (4) est disposé de telle sorte que sa surface réfléchissante est sensiblement parallèle à l'axe commun de la fibre et de la lentille et est situé dans le trajet du rayonnement de la lumière issue du prisme (13).

FIG.1

FIG.2

FIG.3

FIG.4